# EUROPÄISCHE PATENTSCHRIFT

(11) **EP 3 395 605 B1**
(45) Veröffentlichungstag und Bekanntmachung des Hinweises auf die Patenterteilung: **07.07.2021**
(21) Anmeldenummer: 18156610.0
(22) Anmeldetag: 14.02.2018
(51) Int. Cl.: B60L 7/02, B60W 30/18, B60L 7/22, B60L 7/00, B60W 10/00, H01C 1/08

(54) **FAHRZEUG SOWIE BREMSWIDERSTAND FÜR EIN FAHRZEUG**
VEHICLE AND BRAKE RESISTANCE FOR A VEHICLE
VÉHICULE AINSI QUE RÉSISTANCE DE FREINAGE POUR UN VÉHICULE

(30) Priorität: 28.04.2017 DE 102017207274
(43) Veröffentlichungstag der Anmeldung: 31.10.2018
(73) Patentinhaber: Siemens Mobility GmbH, 81739 München (DE)
(72) Erfinder: Amler, Dr. Gerald, 90475 Nürnberg (DE); Karipidis, Dr. Claus-Ulrich, 91058 Erlangen (DE); Otto, Marcus, 15713 Königs Wusterhausen (DE); Rüter, Dr. Arnd, 47802 Krefeld (DE)

(56) Entgegenhaltungen:
- WO-A1-2016/173852
- US-A1- 2014 033 948
- US-B2- 8 327 623

## Beschreibung

Ein erfindungsgemäßes Fahrzeug weist zumindest eine elektrodynamische Bremseinrichtung mit zumindest einem Bremswiderstand auf.

Aus der deutschen Offenlegungsschrift DE 10 2015 203 689 A1 ist ein Schienenfahrzeug bekannt, bei dem ein Bremswiderstand im Bereich der Fahrzeugaußenhaut schwenkbar gelagert ist und von einer eingeschwenkten Stellung in eine ausgeschwenkte Stellung und umgekehrt bewegt werden kann. Durch das Ausschwenken des Bremswiderstands lässt sich erreichen, dass ein Luftstrom durch eine Öffnung in der Fahrzeugaußenhaut ins Fahrzeuginnere zur Kühlung bzw. Entwärmung des Bremswiderstands geleitet wird.

Aus der Schrift US 2014/0033948 A1 ist ein Schienenfahrzeug mit einer Lokomotive, einem Tender sowie weiteren Wagen bekannt. Ein Verbrennungsmotor treibt einen Generator an, welcher insbesondere elektrische Energie für Traktionsmotoren der Lokomotive bereitstellt. Die Traktionsmotoren dienen ebenfalls einer dynamischen Bremsung des Schienenfahrzeugs, wobei die mittels der Traktionsmotoren in elektrische Energie gewandelte kinetische Energie auf dem Wagenkasten der Lokomotive angeordneten Bremswiderstände zugeführt wird, welche die elektrische Energie in Wärme wandeln und an die Umgebung abführen.

Aus der Schrift US 8 327 623 B2 ist ein System zur Nutzung während eines Bremsvorgangs regenerierter elektrischer Energie für den Betrieb von Hilfsbetrieben einer Lokomotive bekannt. Dabei weist die Lokomotive einen oder mehrere miteinander verschaltete Bremswiderstände auf, in denen von Traktionsmotoren bei einer dynamischen Bremsung generierte elektrische Energie in Wärmeenergie gewandelt wird. Die Bremswiderstände sind im Dachbereich der Lokomotive angeordnet und werden während des Bremsvorgangs mittels einer forcierten Luftströmung gekühlt.

Aus der Schrift WO 2016/173852 A1 ist ein Schienenfahrzeug bekannt, bei welchem in einem Generatorbetrieb des Antriebs erzeugte elektrische Energie in einer im Dachbereich des Fahrzeugs angeordnete Verbrauchseinrichtung in hauptsächlich elektromagnetische Strahlung gewandelt wird. Die Verbrauchseinrichtung ist dabei als eine Strahlungsquelle in Form einer Gasentladungsstrahlungsquelle, einer Halogengasentladungsstrahlenquelle oder ein Halbleiterbauelement, insbesondere als eine Leuchtdiode, ausgestaltet.

Der Erfindung liegt die Aufgabe zugrunde, ein Fahrzeug anzugeben, das besonders unempfindlich gegenüber Störungen ist und eine besonders zuverlässige Kühlung bzw. Entwärmung des Bremswiderstands gewährleistet.

Diese Aufgabe wird erfindungsgemäß durch ein Fahrzeug mit den Merkmalen gemäß dem unabhängigen Patentanspruch 1 gelöst. Vorteilhafte Ausgestaltungen sind in abhängigen Patentansprüchen angegeben.

Gemäß der Erfindung ist vorgesehen, dass der zumindest eine Bremswiderstand einen dauerhaft geschlossenen, insbesondere bei Bewegung des Fahrzeugs vom Fahrtwind außen umströmten, Abschnitt der Fahrzeughülle bildet, und dass der Bremswiderstand Wärme über den dauerhaft geschlossenen Abschnitt nach außen an die Umgebung abführt.

Ein wesentlicher Vorteil des erfindungsgemäßen Fahrzeugs ist darin zu sehen, dass die Fahrzeughülle im Bereich des Bremswiderstands dauerhaft geschlossen ist, also ohne mechanische Antriebe, mechanische Klappen oder dergleichen auskommt. Die elektrodynamische Bremseinrichtung ist also derart ausgestaltet, dass eine Entwärmung bzw. Kühlung des Bremswiderstands durch den vorbeiströmenden bzw. passierenden Luftstrom und/oder durch Abstrahlung durch den außen umströmten Abschnitt der Fahrzeughülle erfolgt. Mangels beweglicher mechanischer Teile wie Klappen oder Luftumlenkeinrichtungen kann folglich auch kein Defekt derartiger Teile auftreten, geschweige denn ein Defekt, der einen Ausfall der Bremseinrichtung bewirken könnte.

Gemäß einer Weiterbildung der Erfindung ist der dauerhaft geschlossene Abschnitt frei von mechanisch beweglichen Teilen zur Beeinflussung eines Luftstromes bzw. des Fahrtwindes. Derartige mechanisch bewegliche Teile werden beispielsweise durch Hilfsbetriebe eines Schienenfahrzeugs gesteuert und bewegt werden. Der erfindungsgemäße geschlossene Abschnitt ist somit hilfsbetriebefrei.

Der dauerhaft geschlossene Abschnitt ist bevorzugt für den passierenden Fahrtwind aerodynamisch verwirbelungsfrei, entsprechend insbesondere beispielsweise glatt und stufenfrei oder mit einer aerodynamisch wirkenden Haifischschuppenstruktur versehen. Der dauerhaft geschlossene Abschnitt kann zudem verformungsfrei ausgestaltet sein.

Erfindungsgemäß ist eine während des Zeitraums einer Vollbremsung des Fahrzeugs mittels der elektrodynamischen Bremseinrichtung in den zumindest einen Bremswiderstand eingespeiste Bremsenergie größer als die während des Zeitraums der Bremsung über den dauerhaft geschlossenen Abschnitt an die Umgebung abführbare Wärme. Dabei ist ein maximaler Zeitraum der Bremsung mittels der elektrodynamischen Bremseinrichtung durch eine maximale Wärmeaufnahmefähigkeit des Bremswiderstands begrenzt. Unter einer Vollbremsung kann hierbei eine Bremsung mit höchster Bremswirkung verstanden werden.

Die Wärmeaufnahmefähigkeit des zumindest einen Bremswiderstands kann, insbesondere bei der vorstehenden Ausgestaltung, bevorzugt derart bemessen werden, dass dieser mindestens die Bremsenergie, die im Falle einer Vollbremsung in den Bremswiderstand eingespeist wird, abzüglich der während des Bremsens über den dauerhaft geschlossenen Abschnitt abgeführten Wärme, zerstörungsfrei aufnehmen kann.

Die Wärmeaufnahmefähigkeit jedes Bremswiderstands beträgt gemäß einer weiteren Weiterbildung jeweils mindestens 50 MJ.

Gemäß einer weiteren Weiterbildung ist die Wärmeabfuhr des zumindest einen Bremswiderstands über den dauerhaft geschlossenen Abschnitt stets größer als die im Falle einer Vollbremsung in dem Bremswiderstand erzeugte Wärme. Dies sollte unabhängig von der Ausgangsgeschwindigkeit, bei der die Vollbremsung ausgelöst wird, sein. Vorteilhaft kann bei dieser Ausgestaltung kein Überhitzen des oder der Bremswiderstände auftreten, und zwar unabhängig von der Länge und Anzahl der Bremsvorgänge sowie unabhängig von der Ausgangsgeschwindigkeit.

Gemäß einer weiteren Weiterbildung ist der geschlossene, bei Fahrt vom Fahrtwind außen umströmte Abschnitt der Fahrzeughülle, über den der Bremswiderstand Wärme nach außen an die Umgebung abführt, derart dimensioniert und/oder ausgebildet, dass die Wärmeabfuhr über Konvektion größer als die über Wärmestrahlung ist, vorzugsweise zumindest im zeitlichen Mittel über den Zeitraum einer Vollbremsung bzw. zu jedem Zeitpunkt.

Sofern das Fahrzeug mehrgliedrig ist und zumindest einen antreibbaren Wagen umfasst, kann gemäß einer weiteren Weiterbildung jeder antreibbare Wagen zumindest einen Bremswiderstand aufweisen. Die Wärmeaufnahmefähigkeit des oder der in den antreibbaren Wagen angeordneten Bremswiderstände beträgt dabei vorzugsweise jeweils, d.h. pro Bremswiderstand oder zumindest in Summe pro Wagen, mindestens 100 MJ.

Sofern das Fahrzeug mehrgliedrig ist und zumindest einen nicht angetriebenen Wagen umfasst, kann gemäß einer weiteren

Weiterbildung der zumindest eine nicht angetriebene Wagen zumindest einen Bremswiderstand aufweisen, der mit einem Bremsstrom gespeist wird, der bei einem Bremsen des Fahrzeugs von einem anderen Wagen, vorzugsweise einem antreibbaren Wagen oder zumindest einem Wagen mit einem elektrodynamischen Generator, geliefert wird. Die Wärmeaufnahmefähigkeit des oder der in dem nicht angetriebenen Wagen angeordneten Bremswiderstände beträgt vorzugsweise jeweils, d.h. pro Bremswiderstand oder zumindest in Summe pro Wagen, mindestens 100 MJ.

Der zumindest eine Bremswiderstand umfasst erfindungsgemäß zumindest einen elektrischen Leiter.

Gemäß einer Ausgestaltung weist der elektrische Leiter eine Mäanderstruktur oder Streifenstruktur mit vorzugsweise parallelen Leiterstreifen auf und/oder bildet eine Spule oder eine Leiterspirale.

Erfindungsgemäß ist der elektrische Leiter in einem elektrisch nichtleitenden Material eingebettet, wobei die Außenseite des nichtleitenden Materials den dauerhaft geschlossenen Abschnitt der Fahrzeughülle bildet.

Gemäß einer weiteren Ausgestaltung ist der elektrische Leiter in Keramik oder einem Verbundmaterial, insbesondere einem keramikhaltigen Verbundmaterial, eingebettet.

Gemäß einer weiteren Weiterbildung des ersten Aspekts der Erfindung ist das Fahrzeug ein Schienenfahrzeug, insbesondere ein Hochgeschwindigkeitsschienenfahrzeug mit einer Höchstgeschwindigkeit von mindestens 250 km/h.

Der zumindest eine Bremswiderstand kann gemäß einer weiteren Weiterbildung einen beim Bremsen stromdurchflossenen Abschnitt aus einem Bimetall umfassen, der den dauerhaft geschlossenen Abschnitt der Fahrzeughülle bei Erwärmung verformt.

Die Erfindung wird nachfolgend anhand von Ausführungsbeispielen näher erläutert. Dabei zeigen beispielhaft
- Figur 1: in einer schematischen Darstellung ein erfindungsgemäßes Schienenfahrzeug von der Seite,
- Figur 2: in einer schematischen Darstellung ein weiteres erfindungsgemäßes Schienenfahrzeug von der Seite,
- Figur 3: einen Bremswiderstand, der bei den Hochgeschwindigkeitsschienenfahrzeugen gemäß den Figuren 1 und 2 eingesetzt werden kann und einen elektrischen Leiter mit Streifenstruktur aufweist,
- Figur 4: die Anordnung eines elektrischen Leiters innerhalb des Bremswiderstands gemäß Figur 3,
- Figur 5: eine alternative Anordnung eines elektrischen Leiters innerhalb des Bremswiderstands gemäß Figur 3,
- Figur 6: einen Bremswiderstand, der bei den Schienenfahrzeugen gemäß den Figuren 1 und 2 eingesetzt werden kann und einen elektrischen Leiter mit Mäanderstruktur aufweist, und
- Figur 7: ein mehrgliedriges Schienenfahrzeug, bei dem ein Bremswiderstand in einem nicht angetriebenen Wagen angeordnet ist.

In den Figuren werden der Übersicht halber für identische oder vergleichbare Komponenten stets dieselben Bezugszeichen verwendet.

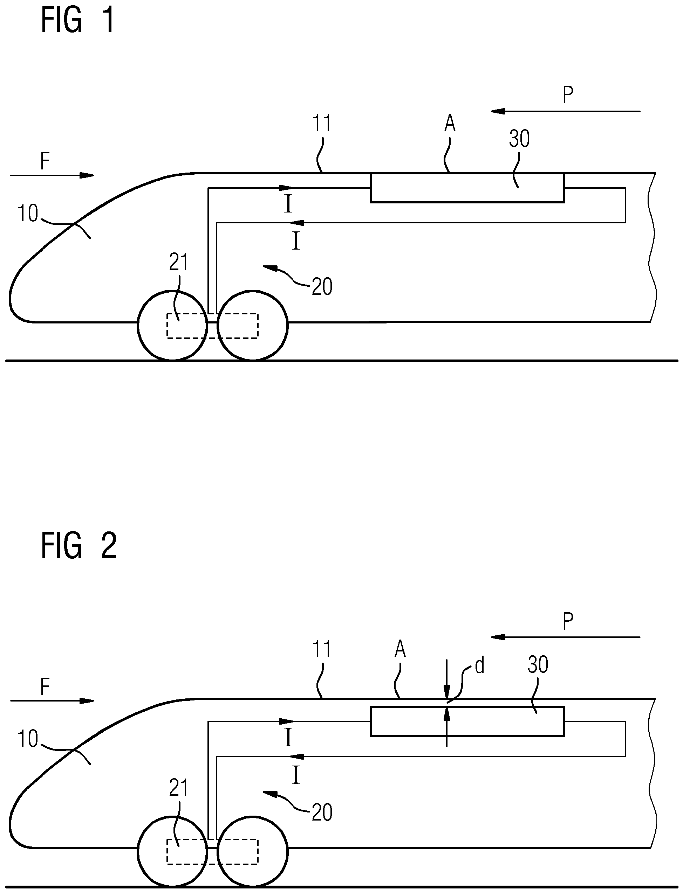

Die Figur 1 zeigt in einer schematischen Darstellung von der Seite ein Ausführungsbeispiel für ein Hochgeschwindigkeitsschienenfahrzeug 10. Das Hochgeschwindigkeitsschienenfahrzeug 10 ist mit einer oder mehreren Bremseinrichtungen 20 ausgestattet, die jeweils einen oder mehrere Bremswiderstände 30 aufweisen.

Bei dem Ausführungsbeispiel gemäß Figur 1 bildet der Bremswiderstand selbst einen Abschnitt A der Fahrzeughülle 11, der dauerhaft geschlossen und außen glatt ist und bei Fahrt des Hochgeschwindigkeitsschienenfahrzeugs 10 vom Fahrtwind F aerodynamisch verwirbelungsfrei umströmt wird. Der dauerhaft geschlossene Abschnitt A der Fahrzeughülle 11 ist hilfsbetriebefrei, er weist also keine mechanisch beweglichen Teile zur Beeinflussung des den Abschnitt A bzw. die Fahrzeughülle 11 passierenden Luftstroms bzw. Fahrtwinds F auf.

Wird das Hochgeschwindigkeitsschienenfahrzeug 10 bei einer Fahrt entlang der Pfeilrichtung P, also bei einer Fahrt von rechts nach links in Figur 1, mittels der Bremseinrichtung 20 gebremst, so wird von einem nicht weiter gezeigten elektrodynamischen Generator 21 der elektrodynamischen Bremseinrichtung 20 ein Bremsstrom I in den Bremswiderstand 30 eingespeist. Der Bremsstrom I führt zu einem Erwärmen des Bremswiderstands 30. Während des Bremsens wird also kinetische Energie des Fahrzeugs in elektrische Energie gewandelt, welche mittels des Bremswiderstands wiederum in Wärmee gewandelt wird.

Die Wärme wird vorzugsweise überwiegend, insbesondere zu über 90 %, über Konvektion an den die Fahrzeughülle 11 und damit den Abschnitt A umströmenden Fahrtwind F bzw. an die Umgebungsluft abgegeben. Mit anderen Worten erfolgt die Wärmeabgabe also maßgeblich durch Konvektion, und weniger bzw. nur vernachlässigbar über die Abgabe von Wärmestrahlung.

Bei der Ausführungsvariante gemäß Figur 1 bildet der Bremswiderstand 30 selbst unmittelbar den vom Fahrtwind F außen umströmten Abschnitt A der Fahrzeughülle 11. Alternativ kann der Bremswiderstand 30 auch in unmittelbarer Nähe zu einem vom Fahrtwind F außen umströmten Abschnitt A der Fahrzeughülle 11 angeordnet sein; eine solche Ausführungsvariante zeigt beispielhaft die Figur 2. Trotz des gewissen Abstands d zwischen dem Bremswiderstand 30 und der Fahrzeughülle 11 kann die Wärme dennoch in Richtung der Fahrzeughülle 11 abfließen und dort durch Konvektion an die Umgebungsluft bzw. den Fahrtwind F abgegeben werden.

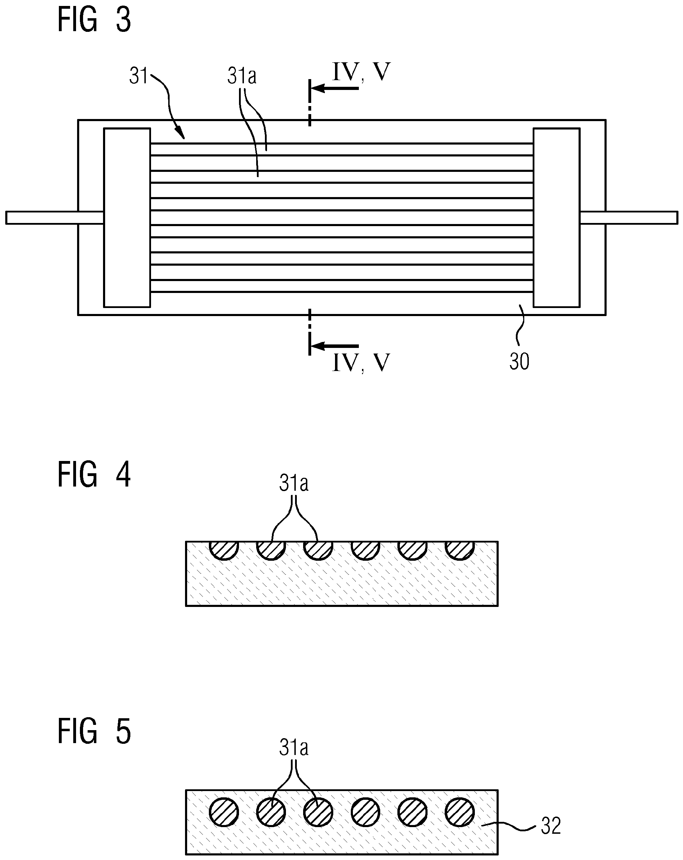

Die Figur 3 zeigt ein Ausführungsbeispiel für einen Bremswiderstand 30, der bei den Hochgeschwindigkeitsschienenfahrzeugen 10 gemäß Figur 1 oder 2 eingesetzt werden kann, näher im Detail. Der Bremswiderstand 30 umfasst einen elektrischen Leiter 31, der eine Streifenstruktur mit vorzugsweise parallelen Leiterstreifen 31a bildet.

Der elektrische Leiter 31 kann unmittelbar an der Oberfläche des Bremswiderstands 30 angeordnet sein und selbst abschnittsweise die Oberfläche des Bremswiderstands 30 und damit abschnittsweise den Abschnitt A der Fahrzeughülle 11 bilden. Eine solche Ausgestaltung ist in der Figur 4 gezeigt.

Wird der Bremswiderstand 30 zur Bildung des Abschnitts A der Fahrzeughülle 11 eingesetzt, wie dies in der Figur 1 gezeigt ist, so bildet der elektrische Leiter 31 bzw. dessen Leiterstreifen 31a selbst unmittelbar Unterabschnitte der Fahrzeughülle 11.

Alternativ kann vorgesehen sein, dass der elektrische Leiter 31 bzw. die in Figur 3 gezeigten Leiterstreifen 31a in einem Material 32 des Bremswiderstands 31 vollständig eingebettet sind. Eine solche Ausführungsform ist in der Figur 5 gezeigt. Das Material 32 ist vorzugsweise elektrisch nicht leitend oder zumindest elektrisch weniger gut leitend als der darin eingebettete elektrische Leiter 31, aber dennoch möglichst gut wärmeleitend. Bei dem Material 32 kann es sich um Keramik oder um ein Verbundmaterial handeln, beispielsweise um ein keramikhaltiges Verbundmaterial. Derartige Materialien sind trotz ihrer elektrischen Isolationsfähigkeit recht gute Wärmeleiter und Wärmespeicher.

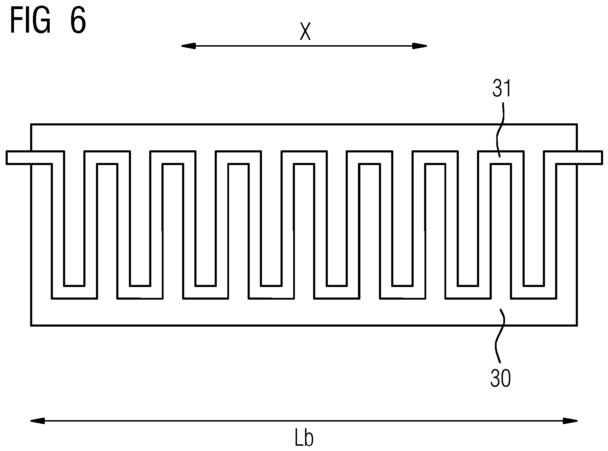

Die Figur 6 zeigt eine alternative Ausgestaltung des elektrischen Leiters 31 innerhalb des Bremswiderstands 30. Bei der Ausführungsform gemäß Figur 6 weist der elektrische Leiter eine Mäanderstruktur auf, durch die bewirkt wird, dass die Leiterlänge des elektrischen Leiters deutlich länger ist als die Länge Lb des Bremswiderstands in Fahrzeuglängsrichtung X.

Der elektrische Leiter 31 kann unmittelbar an der Oberfläche des Bremswiderstands 30 angeordnet sein, wie dies bereits im Zusammenhang mit der Figur 4 erläutert worden ist. Alternativ kann der elektrische Leiter auch innerhalb eines Materials 32 eingebettet sein, wie dies in der Figur 5 gezeigt ist. Wie im Zusammenhang mit den Figuren 1 und 2 erläutert, kann der elektrische Leiter 31 selbst abschnittsweise die Fahrzeughülle 11 bilden oder unmittelbar beabstandet zu dieser angeordnet sein.

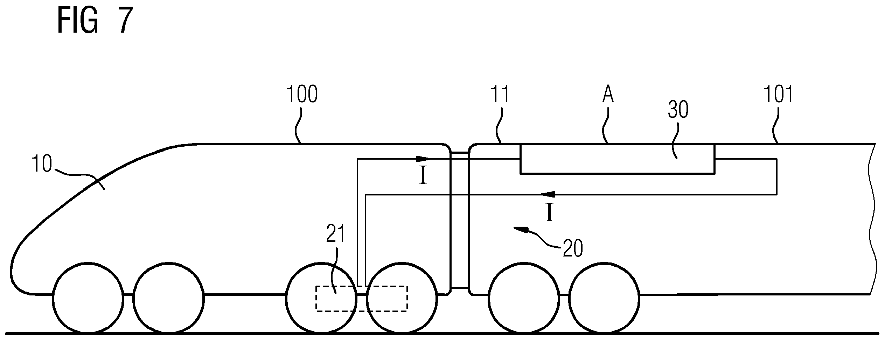

Die Figur 7 zeigt ein Ausführungsbeispiel für ein mehrgliedriges Hochgeschwindigkeitsschienenfahrzeug 10. Das Hochgeschwindigkeitsschienenfahrzeug 10 weist mindestens einen angetriebenen bzw. antreibbaren Wagen 100 und mindestens einen mit diesem gekoppelten nicht angetriebenen Wagen 101 auf. Ein Bremswiderstand 30 einer wagenübergreifenden Bremseinrichtung 20 befindet sich im nicht angetriebenen Wagen 101 und ein elektrodynamischer Generator 21 der elektrodynamischen Bremseinrichtung 20 befindet sich im angetriebenen Wagen 100. Der Bremswiderstand 30 wird von dem elektrodynamischen Generator 21 - im Falle eines Bremsvorgangs - mit einem Bremsstrom I versorgt.

Bei dem Hochgeschwindigkeitsschienenfahrzeug 10 werden also in vorteilhafter Weise nicht angetriebene Wagen zur Wärmeabfuhr der Wärme von Bremswiderständen herangezogen, die von angetriebenen Wagen aus gespeist werden. Die Bremswiderstände bilden einen dauerhaft geschlossenen, bei Fahrt vom Fahrtwind F außen umströmten Abschnitt A der Fahrzeughülle 11 oder sind in unmittelbarer Nähe zu einem solchen Abschnitt angeordnet.

Obwohl die Erfindung im Detail durch bevorzugte Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Fahrzeug, aufweisend zumindest eine elektrodynamische Bremseinrichtung (20) mit zumindest einem Bremswiderstand (30),
**dadurch gekennzeichnet, dass**
der zumindest eine Bremswiderstand (30) zumindest einen elektrischen Leiter (31) umfasst, welcher in einem elektrisch nichtleitenden Material (32) eingebettet ist, wobei eine Außenseite des nichtleitenden Materials einen dauerhaft geschlossenen und bei Bewegung des Fahrzeugs vom Fahrtwind (F) außen umströmten Abschnitt (A) der Fahrzeughülle (11) bildet, und der Bremswiderstand (30) Wärme über den dauerhaft geschlossenen Abschnitt (A) nach außen an die Umgebung abführt, und
die während des Zeitraums einer Vollbremsung des Fahrzeugs mittels der elektrodynamischen Bremseinrichtung (20) in den zumindest einen Bremswiderstand (30) eingespeiste Bremsenergie größer als die während des Zeitraums der Bremsung über den dauerhaft geschlossenen Abschnitt (A) an die Umgebung abführbare Wärme ist, wobei ein maximaler Zeitraum der Bremsung mittels der elektrodynamischen Bremseinrichtung (20) durch eine maximale Wärmeaufnahmefähigkeit des Bremswiderstands (30) begrenzt ist.

2. Fahrzeug nach Anspruch 1,
**dadurch gekennzeichnet, dass**
der dauerhaft geschlossene Abschnitt (A) frei von mechanisch beweglichen Teilen zur Beeinflussung eines Luftstromes ist.

3. Fahrzeug nach einem der vorstehenden Ansprüche,
**dadurch gekennzeichnet, dass**
die Wärmeaufnahmefähigkeit des zumindest einen Bremswiderstands (30) derart bemessen ist, dass dieser mindestens die Bremsenergie, die im Falle einer Vollbremsung in den Bremswiderstand (30) eingespeist wird, abzüglich der während des Bremsens über den dauerhaft geschlossenen Abschnitt (A) abgeführten Wärme, zerstörungsfrei aufnehmen kann.

4. Fahrzeug nach einem der voranstehenden Ansprüche,
**dadurch gekennzeichnet, dass**
die Wärmeaufnahmefähigkeit jedes Bremswiderstands (30) mindestens 50 MJ beträgt.

5. Fahrzeug nach Anspruch 1 oder 2,
**dadurch gekennzeichnet, dass**
die mögliche Wärmeabfuhr des zumindest einen Bremswiderstands (30) über den dauerhaft geschlossenen Abschnitt (A) bei einer Geschwindigkeit stets größer als die im Falle einer Vollbremsung in dem Bremswiderstand (30) erzeugte Wärme bei dieser Geschwindigkeit ist.

6. Fahrzeug nach einem der voranstehenden Ansprüche,
**dadurch gekennzeichnet, dass**
die Wärmeabfuhr über Konvektion zumindest im zeitlichen Mittel über den Zeitraum einer Vollbremsung oder zu jedem Zeitpunkt größer als die über Wärmestrahlung ist.

7. Fahrzeug nach einem der voranstehenden Ansprüche,
**dadurch gekennzeichnet, dass**
das Fahrzeug mehrgliedrig ist und zumindest einen antreibbaren Wagen (100) umfasst, und
jeder antreibbare Wagen (100) zumindest einen Bremswiderstand (30) aufweist, wobei die Wärmeaufnahmefähigkeit der Bremswiderstände (30) jeweils, pro Bremswiderstand oder zumindest in Summe pro Wagen, mindestens 100 MJ beträgt.

8. Fahrzeug nach einem der voranstehenden Ansprüche,
**dadurch gekennzeichnet, dass**
das Fahrzeug mehrgliedrig ist und zumindest einen nicht angetriebenen Wagen (101) umfasst, und
der zumindest eine nicht angetriebene Wagen (101) zumindest einen Bremswiderstand (30) aufweist, wobei die Wärmeaufnahmefähigkeit der Bremswiderstände (30) jeweils, pro Bremswiderstand oder zumindest in Summe pro Wagen, mindestens 100 MJ beträgt,
wobei der zumindest eine Bremswiderstand (30) des zumindest einen nicht angetriebenen Wagens (101) mit einem Bremsstrom (I) gespeist wird, der bei einem Bremsen des Fahrzeugs von einem antreibbaren Wagen (100) geliefert wird.

9. Fahrzeug nach Anspruch 1,
**dadurch gekennzeichnet, dass**
der elektrische Leiter (31) eine Mäanderstruktur oder Streifenstruktur mit vorzugsweise parallelen Leiterstreifen (31a) aufweist, oder eine Spule oder eine Leiterspirale bildet.

10. Fahrzeug nach Anspruch 1,
**dadurch gekennzeichnet, dass**
der elektrische Leiter (31) in Keramik oder einem Verbundmaterial, insbesondere einem keramikhaltigen Verbundmaterial, eingebettet ist.

11. Fahrzeug nach einem der voranstehenden Ansprüche,
**dadurch gekennzeichnet, dass**
das Fahrzeug ein Hochgeschwindigkeitsschienenfahrzeug (10), insbesondere mit einer Höchstgeschwindigkeit von mindestens 250 km/h, ist.

12. Fahrzeug nach einem der voranstehenden Ansprüche,
**dadurch gekennzeichnet, dass**
der zumindest eine Bremswiderstand (30) einen beim Bremsen stromdurchflossenen Abschnitt aus einem Bimetall umfasst, der den dauerhaft geschlossenen Abschnitt (A) der Fahrzeughülle (11) bei Erwärmung verformt.

## Claims

1. Vehicle having at least one electrodynamic braking apparatus (20) with at least one brake resistor (30),
**characterised in that**
the at least one brake resistor (30) comprises at least one electrical conductor (31), which is embedded in an electrically non-conductive material (32), wherein an external side of the non-conductive material forms a portion (A) of the vehicle shell (11) that is permanently closed and over which motion wind (F) flows externally when the vehicle is moving, and the brake resistor (30) conducts away heat outwardly to the surroundings via the permanently closed portion (A), and the braking energy fed during the time period of a full braking of the vehicle by means of the electrodynamic braking apparatus (20) into the at least one brake resistor (30) is greater than the heat conductable away during the time period of the braking via the permanently closed portion (A) to the surroundings, wherein a maximum time period of the braking is delimited by means of the electrodynamic braking apparatus (20) due to a maximum heat capacity of the brake resistor (30) .

2. Vehicle according to claim 1,
**characterised in that**
the permanently closed portion (A) is free from mechanically movable parts for influencing an airflow.

3. Vehicle according to one of the preceding claims,
**characterised in that**
the heat capacity of the at least one brake resistor (30) is dimensioned such that it can absorb without destruction at least the braking energy which is fed into the brake resistor (30) in the event of a full braking, less the heat conducted away via the permanently closed portion (A) during the braking.

4. Vehicle according to one of the preceding claims,
**characterised in that**
the heat capacity of each brake resistor (30) is at least 50 MJ.

5. Vehicle according to claim 1 or 2,
**characterised in that**
the possible heat removal of the at least one brake resistor (30) by means of the permanently closed portion (A) at a velocity is always greater than the heat generated in the brake resistor (30) at this velocity in the case of a full braking.

6. Vehicle according to one of the preceding claims,
**characterised in that**
the heat removal by means of convection is greater than that by means of thermal radiation, at least on average over time during the time period of a full braking or at any time point.

7. Vehicle according to one of the preceding claims,
**characterised in that**
the vehicle is multi-membered and comprises at least one drivable wagon (100), and
each drivable wagon (100) comprises at least one brake resistor (30), the heat capacity of the brake resistors (30) each, per brake resistor, or at least in total per wagon, being at least 100 MJ.

8. Vehicle according to one of the preceding claims,
**characterised in that**
the vehicle is multi-membered and comprises at least one non-driven wagon (101), and
the at least one non-driven wagon (101) has at least one brake resistor (30), wherein the heat capacity of the brake resistors (30) each, per brake resistor, or at least in total per wagon, is at least 100 MJ,
wherein the at least one brake resistor (30) of the at least one non-driven wagon (101) is fed with a braking current (I) which on a braking of the vehicle is supplied from a drivable wagon (100).

9. Vehicle according to claim 1,
**characterised in that**
the electrical conductor (31) has a meandering structure or a strip-shaped structure with preferably parallel conductor strips (31a) or forms a coil or a conductor spiral.

10. Vehicle according to claim 1,
**characterised in that**
the electrical conductor (31) is embedded in ceramics or a composite material, in particular a ceramics-containing composite material.

11. Vehicle according to one of the preceding claims,
**characterised in that**
the vehicle is a high-speed rail vehicle (10), in particular having a maximum speed of at least 250 km/h.

12. Vehicle according to one of the preceding claims,
**characterised in that**
the at least one brake resistor (30) can comprise a portion made of a bimetal through which current flows during braking which deforms the permanently closed portion (A) of the vehicle shell (11) on heating.

## Revendications

1. Véhicule, comportant au moins un dispositif (20) de freinage électrodynamique ayant au moins une résistance (30) de freinage,
**caractérisé en ce que**
la au moins une résistance (30) de freinage comprend au moins un conducteur (31) électrique, qui est incorporé dans un matériau (32) non conducteur de l'électricité, dans lequel un côté extérieur du matériau non conducteur forme une partie (A), fermée en permanence et, lors du déplacement du véhicule, contournée à l'extérieur par le vent (F) relatif, de l'enveloppe (11) du véhicule et la résistance (30) de freinage évacue vers l'extérieur à l'environnement de la chaleur par la partie (A) fermée en permanence, et
l'énergie de freinage, emmagasinée dans la au moins une résistance (30) de freinage pendant le laps de temps d'un freinage complet d'un véhicule au moyen du dispositif (20) de freinage électrodynamique, est plus grande que la chaleur pouvant être évacuée à l'environnement pendant le laps de temps du freinage par l'intermédiaire de la partie (A) fermée en permanence, un laps de temps maximum du freinage au moyen du dispositif (20) de freinage électrodynamique étant limité par une capacité maximum d'absorption de la chaleur de la résistance (30) de freinage.

2. Véhicule suivant la revendication 1,
**caractérisé en ce que**
la partie (A) fermée en permanence est sans partie mobile mécaniquement influençant un courant d'air.

3. Véhicule suivant l'une des revendications précédentes,
**caractérisé en ce que**
la capacité d'absorption de la chaleur de la au moins une résistance (30) de freinage est telle que celle-ci peut absorber sans destruction au moins l'énergie de freinage, qui est emmagasinée dans le cas d'un freinage complet dans la résistance (30) de freinage, déduction faite de la chaleur évacuée pendant le freinage par la partie (A) fermée en permanence.

4. Véhicule suivant l'une des revendications précédentes,
**caractérisé en ce que**
la capacité d'absorption de la chaleur de chaque résistance (30) de freinage est d'au moins 50 MJ.

5. Véhicule suivant la revendication 1 ou 2,
**caractérisé en ce que**
l'évacuation de chaleur possible de la au moins une résistance (30) de freinage par la partie (A) fermée en permanence est, pour une vitesse, toujours plus grande que la chaleur, produite dans le cas d'un freinage complet dans la résistance (30) de freinage, à cette vitesse.

6. Véhicule suivant l'une des revendications précédentes,
**caractérisé en ce que**
l'évacuation de chaleur par convection est, au moins en moyenne dans le temps sur le laps de temps d'un freinage complet ou à chaque instant, plus grande que celle par rayonnement calorifique.

7. Véhicule suivant l'une des revendications précédentes,
**caractérisé en ce que**
le véhicule est à éléments multiples et comprend au moins une voiture (100) pouvant être entraînée, et
chaque voiture (100) pouvant être entraînée a au moins une résistance (30) de freinage, la capacité d'absorption de la chaleur des résistances (30) de freinage étant, respectivement par résistance de freinage ou au moins en somme par résistance, par voiture, d'au moins 100 MJ.

8. Véhicule suivant l'une des revendications précédentes,
**caractérisé en ce que**
le véhicule est à plusieurs éléments et comprend au moins une voiture (101) qui n'est pas entraînée, et
la au moins une voiture (101) qui n'est pas entraînée a au moins une résistance (30) de freinage, la capacité d'absorption de la chaleur des résistances (30) de freinage étant respectivement, par résistance de freinage ou au moins en somme par voiture, d'au moins 100 MJ,
dans lequel la au moins une résistance (30) de freinage de la au moins une voiture (101) qui n'est pas entraînée est alimentée en un courant (I) de freinage qui lors d'un freinage du véhicule, est fourni par une voiture (100) pouvant être entraînée.

9. Véhicule suivant la revendication 1,
**caractérisé en ce que**
le conducteur (31) électrique a une structure sinueuse ou une structure en bande ayant de préférence des bandes (31a) conductrices parallèles ou forment une bobine ou une spirale conductrice.

10. Véhicule suivant la revendication 1,
**caractérisé en ce que**
le conducteur (31) électrique est incorporé dans de la céramique ou dans un matériau composite, notamment un matériau composite contenant de la céramique.

11. Véhicule suivant l'une des revendications précédentes,
**caractérisé en ce que**
le véhicule est un véhicule (10) ferroviaire à grande vitesse, notamment à une vitesse très grande d'au moins 250 km/h.

12. Véhicule suivant l'une des revendications précédentes,
**caractérisé en ce que**
la au moins une résistance (30) de freinage comprend une partie, dans laquelle du courant peut passer lors du freinage, en un bilame, qui déforme au réchauffement la partie (A), fermée en permanence, de l'enveloppe (11) du véhicule.
